# EUROPEAN PATENT SPECIFICATION

(11) **EP 4 538 399 B1**
(45) Date of publication and mention of the grant of the patent: **25.11.2026**
(21) Application number: 24752331.9
(22) Date of filing: 18.04.2024
(51) Int. Cl.: C22B 3/06, C22B 1/02, C22B 5/12, C22B 3/08, C22B 3/10, C22B 3/00, C01G 53/10, C22B 3/04, C22B 3/22, C22B 3/38, C22B 3/44, C22B 23/00, C22B 23/02, C22B 23/06, C22B 26/12, H01M 4/525, C22B 3/26

(54) **ALL-IN-ONE NICKEL SMELTING METHOD FOR NICKEL RECOVERY FROM RAW MATERIALS CONTAINING NICKEL**
ALL-IN-ONE NICKELSCHMELZVERFAHREN ZUR NICKELRÜCKGEWINNUNG AUS NICKELHALTIGEN ROHSTOFFEN
PROCÉDÉ DE FUSION MÉTALLURGIQUE DE NICKEL TOUT-EN-UN POUR LA RÉCUPÉRATION DE NICKEL À PARTIR DE MATIÈRES PREMIÈRES CONTENANT DU NICKEL

(30) Priority: 25.08.2023 KR 20230112131; 30.10.2023 KR 20230146807
(43) Date of publication of application: 16.04.2025
(73) Proprietor: Korea Zinc Co., Ltd., Seoul 03159 (KR); Kemco, Seoul 03159 (KR)
(72) Inventor: CHOI, Heon Sik, Ulsan 44696 (KR); LEE, Je Joong, Seoul 06041 (KR)
(74) Representative: Angerhausen, Christoph
(86) International application number: PCT/KR2024/005220
(87) International publication number: WO 2025/048108

(56) References cited:
- EP-A1- 4 209 606
- WO-A1-2022/050248
- CN-A- 113 321 248
- JP-A- 2019 112 661
- KR-A- 20200 051 925
- KR-A- 20200 051 925
- KR-A- 20210 152 270
- KR-A- 20230 107 003
- KR-B1- 102 509 344
- KR-B1- 102 543 371
- KR-B1- 102 543 371
- US-A1- 2022 010 407

## Description

### TECHNICAL FIELD

The present invention relates to a nickel recovering method and a method for producing a nickel solution using same. More specifically, the present invention relates to a method for refining nickel from raw materials to recover high-purity nickel in various forms suitable for various uses and applications.

### BACKGROUND

Nickel can be recovered from various raw materials such as nickel metal, nickel matte, nickel concentrate, and nickel-containing process by-products. It is known that among various forms of recovered nickel, nickel sulfate is preferably contained in an amount of 99% or higher, with impurities amounting to a few hundred ppm or less, for ordinary cases.

Conventionally, such nickel sulfate was produced by preparing a high-purity nickel sulfate solution through leaching at atmospheric pressure with inorganic acids, neutralization with sodium hydroxide or sodium carbonate, and impurity removal, and then crystallizing the solution into nickel sulfate hexahydrate.

However, such conventional methods are disadvantageous in that there are a limited number of raw materials soluble to specific inorganic acids. In conventional methods, substances used as neutralizing agents (e.g., Na) are removed by washing with water after sludge filtration. This way of Na elimination increases the volume of wastewater and requires significant process time, resulting in lowering productivity and increasing wastewater treatment costs.

KR 102 543 371 B1 provides a method for producing an aqueous solution containing nickel, cobalt, and manganese, which comprises: a leaching process including a pressure leaching process of pressurizing and leaching raw materials to form a leachate containing nickel, cobalt, manganese, and impurities; an impurity removal process of removing the impurities in the leachate; a target precipitation process of adding a neutralizing agent to the filtrate from which the impurities have been removed to precipitate a mixed hydroxide precipitate containing nickel, cobalt, and manganese; and a dissolution process of dissolving the mixed hydroxide precipitate in an acid, wherein the pressure leaching process includes a first-stage pressure leaching process and a second-stage pressure leaching process of pressurizing and leaching the residue from the first-stage pressure leaching process with an acidity higher than that of the first-stage pressure leaching process and the impurity removal process includes a first-stage solvent extraction process of adding a first solvent extractant to selectively extract zinc in the impurities and a second-stage solvent extraction process of adding a second solvent extractant to selectively extract magnesium in the impurities.

KR 2020 0 051 925 A relates to a method for preparing a nickel-cobalt-manganese complex sulfate solution, comprising the steps of: (a) reducing a wasted positive electrode material of a lithium secondary battery in the form of oxide through a roasting process; (b) leaching and filtering, with acid, the wasted positive electrode material of the lithium secondary battery reduced through the roasting process; (c) separating metallic impurities by selectively hydrolyzing the filtrate separated in the step (b); (d) hydrolyzing the filtrate obtained in the step (c) to separate lithium and obtain a cake; and (e) leaching with acid and filtering the cake obtained in the step (d).

### SUMMARY

An embodiment of the present invention is to provide an all-in-one process for recovering highly pure nickel from nickel-containing complex raw materials, which is a hybrid process combining pyrometallurgical and hydrometallurgical technologies, wherein even when various nickel-containing raw materials are applied, appropriate responses can be made, followed by appropriate subsequent processes to acquire nickel in various forms as desired.

Another embodiment of the present invention is to provide an environmentally friendly process that allows for the recycling of process by-products.

Also, the present invention aims to provide an economical and environmentally friendly nickel recovering process that allows for the selective isolation of lithium, the conversion of composite compounds into single compounds, and the recovery of inorganic acids from harmful gas through a pyrometallurgical-type pre-treatment and which is combined with a recycling hydrometallurgical process minimizing the influx of Na impurities, thereby enabling application to complex raw materials even in a single process.

The present invention is as described in claims 1 to 25.

According to the present invention, the reduction heat treatment process enables selective leaching and recovery of lithium from raw materials containing lithium, which forms strong chemical bonds, through thermal treatment.

According to the present invention, a roasting process is utilized to transform various nickel-containing raw materials with various forms of chemical bonds into a single phase, ensuring uniformity in subsequent processes, whereby the process can be flexibly adapted to the rapidly changing nickel raw material market, contributing to the applicability of the entire process.

### BRIEF DESCRIPTION OF THE DRAWINGS

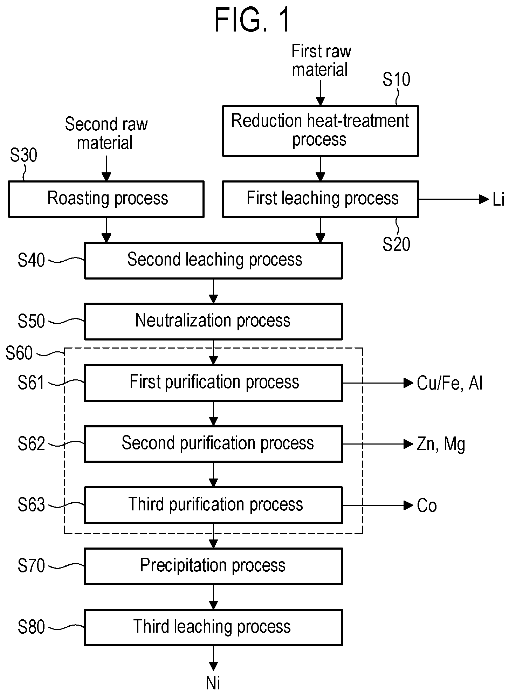

FIG. 1 is a diagram illustrating the entire processes for recovering nickel and manufacturing an aqueous nickel solution according to an embodiment of the present invention.

### DETAILED DESCRIPTION

Embodiments of the present invention are illustrated for the purpose of explaining the technical idea of the present invention.

Herein, unless otherwise specified, "%" is understood to be based on weight.

Below, a description will be given of the present invention with reference to the drawing.

FIG. 1 is a diagram showing the entire process for recovering nickel and manufacturing a nickel solution according to an embodiment of the present invention.

Referring to FIG. 1, a method for recovering nickel to a high purity through a series of processes, and for manufacturing a nickel solution using such smelted nickel, can be provided. This method can enhance versatility across various raw materials and products, operational stability, and purity, while reducing manufacturing costs. Hereinafter, each process will be described in detail with reference to the respective figures.

### Raw Materials

As starting materials, first and second raw materials each consist mainly of complex raw materials containing nickel. The starting materials may each independently include at least one selected from the group of oxides, hydroxides, sulfides, and sulfates. For example, these oxides, hydroxides, sulfides, and sulfates may independently include ore, matte, black mass (BM), black powder (BP), mixed hydroxide precipitate (MHP), mixed carbonate precipitate (MCP), mixed sulfide precipitate (MSP), or a mixture thereof.

For instance, the first raw material may include black mass (BM), black powder (BP), mixed hydroxide precipitate (MHP), mixed carbonate precipitate (MCP), or a mixture thereof. The first raw material may contain impurities such as iron (Fe), cobalt (Co), copper (Cu), zinc (Zn), magnesium (Mg), sodium (Na), silicon (Si), or a combination thereof, in addition to nickel (Ni) and lithium (Li). By way of example, the composition of the first raw material may be given as shown in Table 1. The first raw material may contain nickel in the form of nickel oxide (NiO) or a nickel metal composite oxide mixed with other metals.

**TABLE 1**

| (unit wt%) | | | | | | | | | | |
|---|---|---|---|---|---|---|---|---|---|---|
| | Ni | Li | Fe | Co | Cu | Zn | Mg | Al | Si | Mn |
| Content | 5-35 | 0.001-5 | 0.001-1.5 | 0.1-10 | 0.1-7 | 0.01-2.0 | 0.01-18 | 0.01-2.0 | 0.01-35 | 0.01-5.5 |

The second raw material may include ore, matte, mixed sulfide precipitates, or a mixture thereof. For instance, the second raw material may contain impurities such as iron (Fe), cobalt (Co), copper (Cu), zinc (Zn), magnesium (Mg), sodium (Na), silicon (Si), or a combination thereof, in addition to nickel (Ni) and sulfide (S). By way of example, the composition of the second raw material may be given as shown in Table 2. The second raw material may contain nickel in the form of nickel sulfide (NiS).

**TABLE 2**

| (unit wt%) | | | | | | | | | |
|---|---|---|---|---|---|---|---|---|---|
| | Ni | Fe | Co | Cu | Zn | Mn | Mg | Al | Si |
| Conte nt | 6-30 | 5-45 | 0.1-1.0 | 0.1-5.0 | 0.01-1.0 | 0.01-1.0 | 0.3-15 | 0.1-1.0 | 10-30 |

### Reduction Heat Treatment Process (S10)

As a preprocessing step for the first raw material, a reduction heat treatment process (S10) is performed.

In the reduction heat treatment process (S10), thermal treatment in a reducing atmosphere may be conducted on the first raw material containing nickel and lithium in the form of complex oxides that can bind with various metals. This treatment may cause a phase transition to oxides and/or carbonates, transforming lithium-containing compounds into substances with high solubility in water or inorganic acids.

As such, by converting the compound form of the first raw material containing lithium through the reduction heat treatment process (S10) before proceeding to the first leaching process (S20) for leaching/extraction of lithium described later, the leaching efficiency in the first leaching process (S20) for leaching/extraction of lithium can be improved.

For example, the reduction heat treatment process (S10) can be carried out using thermal treatment equipment such as an electric furnace (e.g., box furnace) or a rotary kiln.

According to an embodiment of the present invention, the reduction heat treatment process (S10) can be performed by introducing the first raw material into the thermal treatment equipment and injecting nitrogen gas, at a temperature of 650 to 950°C. For instance, a certain amount of the first raw material can be loaded into the thermal treatment equipment, and while injecting enough nitrogen gas (N₂ gas) to maintain a reducing atmosphere, reduction heat treatment can proceed at 650 to 950°C. In this process, not only lithium but also other metals can react, undergoing a phase transition through reactions according to [Reaction Formula 1]. Additionally, further reactions can occur through [Reaction Formula 2] and [Reaction Formula 3].

[Reaction Formula 1] 9LiNi_{1/3}Co_{1/3}Mn_{1/3}O₂ + 0.25C → 3NiO + 3MnO₂ + Co₃O₄ + 4.5Li₂O + 0.25CO₂(g)

[Reaction Formula 2] 4MnO₂ + C → 2Mn₂O₃ + CO₂(g)

[Reaction Formula 3] Li₂O + CO₂(g) → Li₂CO₃

### First Leaching Process (S20)

In the first leaching process (S20), the raw materials containing nickel and lithium, which have undergone phase transition by the reduction heat treatment process (S10), are leached.

The first leaching process (S20) can be performed after the reduction heat treatment process (S10). For example, the first leaching process (S20) can be carried out in a wet grinder. The wet grinder may be a ball mill, rod mill, bead mill, attrition mill, etc. The first leaching process may use a first leaching agent (e.g., inorganic acid, water, or their mixture) to selectively leach the treated lithium.

In an embodiment, the inorganic acid may be at least one selected from the group of sulfuric acid (H₂SO₄), hydrochloric acid (HCl), and nitric acid (HNO₃). Diluted inorganic acid with water may be used, and sulfuric acid produced by capturing sulfur dioxide gas generated in the subsequent roasting process (S30) can be utilized.

In an embodiment, water may be used as the first leaching agent. In such cases, lithium from the lithium-containing raw material can be leached in the form of lithium hydroxide (LiOH) through [Reaction Formula 4], producing a first leachate. The first leachate may contain lithium.

[Reaction Formula 4] Li₂CO₃ +2H₂O → 2LiOH + H₂O + CO₂

In an embodiment, metals other than lithium may remain in the residue. For example, metals such as nickel (Ni), cobalt (Co), manganese (Mn), etc., may remain in the residue and be included in the first leaching residue.

The lithium concentration in the first leachate obtained from the first leaching process may be approximately 0.1 to 8.5 g/L. This leachate can be processed into lithium hydroxide monohydrate (LiOH·H₂O), lithium carbonate (Li₂CO₃), lithium phosphate (Li₃PO₄), etc., through well-known precipitation and crystallization methods for use as raw materials in lithium-ion battery cathodes.

MHP and MCP generated in the lithium-ion battery recycling process, which may contain Li in addition to Ni, Co, Mn, can be used as the first raw material for performing the first leaching process.

### Roasting Process (S30)

A roasting process (S30) is performed as a preprocessing step for the second raw material.

In the roasting process (S30), phase transition of nickel-containing raw materials bound in various compounds occurs, along with the recycling of sulfur dioxide gas (SO₂ gas) generated during the thermal treatment process for the production of inorganic acids.

Before the roasting process (S30) is carried out, the second raw material containing nickel may be in the form of a sulfide, which can be converted to an oxide by the roasting process (S30). Leaching the nickel-containing second raw material directly in its sulfide state could result in low leaching efficiency due to the generation of hydrogen sulfide gas (H₂S gas) and metal reprecipitation reactions. Therefore, by converting the compound form of the nickel-containing second raw material through the roasting process (S30) before conducting the second leaching process (S40), the leaching efficiency in the second leaching process (S40) can be improved. In this regard, the roasting process (S30) can be performed using thermal treatment equipment such as an electric furnace (Box Furnace) or a rotary kiln.

According to an embodiment of the present invention, the roasting process (S30) may include loading a certain amount of nickel-containing raw material into an electric furnace, injecting sufficient oxygen (O₂) for the conversion to nickel oxide, and conducting roasting at 650 to 950°C. During this process, not only nickel but also other impurities can react, undergoing a phase transition through the reaction described in [Reaction Formula 5], below. Moreover, the sulfur dioxide gas generated during the roasting process (S30) can be captured by a separate collection facility and converted to sulfuric acid (H₂SO₄) through mixing with water, which can then be used in subsequent leaching processes.

[Reaction Formula 5] 2NiS + 3O₂ → 2NiO + 2SO₂

### Second Leaching Process (S40)

In the second leaching process (S40), the post-roasting residue (calcine) that has undergone phase transition by the roasting process (S30), along with the first leaching residue remaining in the residue from the first leaching process (S20), is leached. The second leaching process (S40) can be performed after both the roasting process (S30) and the first leaching process. In the second leaching process, the post-roasting residue can be leached in a high-temperature high-pressure reactor, while the first leaching residue can be leached in an atmospheric pressure reactor. The second leaching process (S40) can utilize a second leaching agent (e.g., inorganic acid, or a mixture of inorganic acid and water). In an embodiment, the second leaching process (S40) can be conducted using inorganic acid. For instance, at least one inorganic acid selected from the group of sulfuric acid (H₂SO₄), hydrochloric acid (HCl), and nitric acid (HNO₃), diluted inorganic acid with water, or sulfuric acid produced by capturing sulfur dioxide gas generated in the preceding roasting process (S30) may be used.

In an embodiment, sulfuric acid can be used as a second leaching agent. In this regard, nickel can be leached from the first leaching residue and post-roasting residue containing nickel in the form of nickel sulfate (NiSO₄), generating a second leachate, as per [Reaction Formula 6].

[Reaction Formula 6] NiO + H₂SO₄ → NiSO₄ + H₂O

The second leaching process (S40) can be conducted at a temperature of approximately 150 to 250°C and a pressure of 800 to 4300 kPa. The saturation vapor pressure due to the high reaction temperature can lead to the maintenance of a certain level of pressure, and an additional pressure can be applied for a complete reaction.

For example, the second leaching process (S40) can be conducted in an environment with an acidity of 100 to 200 g/L. The second leaching process (S40) can be performed in a low pH acidic environment to secure sufficient second leachate, followed by conducting a subsequent neutralization process (S50).

In an embodiment, not only nickel but also other impurities can be leached together. For example, impurities such as iron (Fe), cobalt (Co), copper (Cu), zinc (Zn), etc., can be leached along with nickel and included in the second leachate.

The nickel concentration in the second leachate obtained from the second leaching process (S40) can be approximately 45 to 105g/L, and the residual acidity can be 10 to 80g/L.

### Neutralization Process (S50)

In the neutralization process (S50), the second leachate produced by the second leaching process (S40) is neutralized. The neutralization process (S50) can be performed after the second leaching process (S40).

If the second leachate is produced in a high pH environment, the volume of the second leachate produced may be reduced.

In an embodiment, after securing sufficient second leachate by conducting the second leaching process (S40) in a low pH acidic environment, the neutralization process (S50) can be performed.

In the neutralization process (S50), a neutralizing agent can be introduced to increase the pH of the second leachate generated in the second leaching process (S40). The addition of the neutralizing agent may also prepare for a subsequent purification process.

In an embodiment, the neutralizing agent may be at least one selected from the group of nickel-containing by-products (MHP, MCP), nickel hydroxide (Ni(OH)₂), nickel carbonate (NiCO₃), sodium hydroxide (NaOH), sodium carbonate (Na₂CO₃), calcium hydroxide (Ca(OH)₂), magnesium hydroxide (Mg(OH)₂), calcium oxide (CaO), and magnesium oxide (MgO).

The reason for using MHP and MCP as raw materials and also as neutralizing agents may be because hydroxides and carbonates generally have high solubility in acids even without roasting, which eliminates the need for processing under expensive high-temperature and high-pressure leaching conditions, and also consumes the acid (H₂SO₄) remaining after the second leaching process (S40), thus preparing in advance for the purification process (S60) that occurs in a high pH range.

In an embodiment, the neutralization process (S50) can use the nickel-containing by-products in the form of a moist cake. When using nickel-containing by-products, the amount of neutralizing agent added separately can be reduced, leading to cost savings. Additionally, the introduction of additional impurities can be prevented, and the concentration of nickel in the neutralized solution can be increased.

In an embodiment, the neutralization process (S50) can be performed at 80°C under conditions of approximately pH 2 to 4.5. During this process, impurities including iron (Fe) and aluminum (Al) may precipitate and be removed.

### Purification Process (S60)

In the purification process (S60), impurities contained in the neutralized solution produced by the neutralization process (S50) are removed so that the neutralized solution can be purified. The purification process (S60) can be performed after the neutralization process (S50).

In an embodiment, the purification process (S60) may include a first purification process (S61) that may remove impurities contained in the neutralized solution produced by the neutralization process (S50); a second purification process (S62) that may remove impurities contained in the first purified solution produced by the first purification process (S61); and a third purification process (S63) that may remove impurities contained in the second purified solution produced by the second purification process (S62).

### First Purification Process (S61)

In the first purification process (S61), the neutralized solution produced by the neutralization process (S50) can be purified. The neutralized solution may be the leachate that has been neutralized. The first purification process (S61) may be a process to remove impurities from the neutralized solution after the neutralization process (S50).

The first purification process (S61) may be a process that removes impurities using the precipitation method. In the first purification process (S61), impurities can be removed by a sulfide precipitation method using at least one selected from the group of sodium sulfide (Na₂S), sodium hydrosulfide (NaSH), ammonium hydrosulfide (NH₄HS), and hydrogen sulfide (H₂S) as a precipitant. Through this process, precipitates primarily consisting of copper sulfide (CuS) and containing impurities such as zinc, lead, and cadmium can be recovered. The precipitates can then be processed into metallic copper through solvent extraction and substitution or other purification processes.

Furthermore, in the first purification process (S61), impurities can be removed by a hydroxide precipitation method using at least one selected from the group of sodium hydroxide (NaOH), sodium carbonate (Na₂CO₃), calcium hydroxide (Ca(OH)₂), magnesium hydroxide (Mg(OH)₂), calcium oxide (CaO), or magnesium oxide (MgO). This process may allow for the precipitation and removal of impurities such as aluminum (Al), iron (Fe), chromium (Cr), silicon (Si), etc. The reaction may be as follows in [Reaction Formula 7] when using sodium hydrosulfide as the precipitant, and in [Reaction Formula 8] when using sodium hydroxide.

[Reaction Formula 7] 2CuSO₄ + 2NaSH → Na₂SO₄ + H₂SO₄ + 2CuS↓

[Reaction Formula 8] MSO₄ + 2NaOH → Na₂SO₄ +M(OH)₂↓ (M=Al, Fe, Cr, Si)

During the sulfide precipitation method of the first purification process (S61), the precipitant may be introduced at an equivalent ratio of about 1.0 to 2.5 relative to the copper contained in the neutralized solution. If the sulfide precipitant is introduced at an equivalent ratio of less than 1.0 relative to copper, the copper precipitation rate may be 83% or less, indicating incomplete reaction. Upon introduction of the sulfide precipitant at an equivalent ratio exceeding 2.5, impurities originating from the precipitant may excessively enter and negatively affect the process, thus potentially lowering the recovery rate due to co-precipitation of nickel. This reaction can be performed at 70°C under conditions of pH 0.8 to 2.5.

In the hydroxide precipitation method of purification, the precipitant can be introduced at an equivalent ratio of about 0.8 to 1.5 relative to the impurities contained in the neutralized solution. If the hydroxide precipitant is introduced at an equivalent ratio of less than 0.8 relative to impurities, the impurity removal rate may be 85% or less, indicating incomplete reaction. Upon introduction of the precipitant at an equivalent ratio exceeding 1.5, impurities originating from the precipitant may excessively enter and negatively affect the process, potentially lowering the recovery rate due to co-precipitation of nickel. This reaction can be performed at 60°C under conditions of pH 2.5 to 4.5.

After the first purification process (S61), the content of copper, iron, aluminum, and silicon in the first purified solution can be reduced to 5mg/L or less each, and the content of zinc, cobalt, and magnesium can be reduced to 20mg/L or less each.

### Second Purification Process (S62)

The second purification process (S62) may allow further purification of the first purified solution produced by the first purification process (S61). The second purification process (S62) can be performed after the first purification process (S61) and may be a process using solvent extraction to remove impurities.

In the second purification process (S62), an organic extractant may be used to remove impurities such as zinc (Zn), magnesium (Mg), and manganese (Mn).

In an embodiment, the second purification process (S62) may include a loading process and a stripping process. Available as the organic extractant may be at least one selected from the group of di-2-ethylhexyl phosphoric acid, mono-2-ethylhexyl (2-ethylhexyl)phosphonate, and bis (2,4,4-trimethylpentyl) phosphinic acid.

The loading process may be a process for extracting impurities, such as zinc, magnesium, manganese, or a combination thereof, contained in the first purified solution into the organic phase. The loading process may be a process for extracting zinc, magnesium, and manganese contained in the first purified solution after the first purification process (S61) into an organic phase using the organic extractant.

The ratio of organic to aqueous phase in the loading process can be about 1 to 3 by volume. When the volume ratio of organic to aqueous phase is below 1, the extraction efficiency may fall 90% or less due to incomplete binding of the target metals with the organic extractant. A volume ratio of organic to aqueous phase exceeding 3 can increase the process cost due to excessive use of the organic extractant. The pH range for the loading process can be controlled to 2.0 to 4.0 using at least one selected from the group of sodium hydroxide (NaOH) and sodium carbonate (Na₂CO₃). In addition, the reaction temperature may be set to be 30 to 40°C.

After the extraction of zinc, magnesium, and manganese into the organic phase, phase separation due to the density difference between the organic and aqueous phases may allow for the formation of a second purified solution. The second purified solution, which is now devoid of zinc, magnesium, and manganese, can contain nickel at concentrations of 50 to 100g/L.

The organic phase containing zinc, magnesium, and manganese may undergo a stripping process. In the stripping process, inorganic acid may be added to the organic phase after the loading process, to remove the impurities. This stripping process may be a back-extraction process for pulling the zinc, magnesium, and manganese contained in the organic phase back into the aqueous phase.

The volume ratio of organic to aqueous phase in the stripping process may be about 5 to 10. When the volume ratio of organic to aqueous phase in the stripping process is below 5, water usage may increase while complete extraction of impurities may be possible. When the volume ratio of organic to aqueous phase in the stripping process is above 10, the efficiency of impurity back-extraction may decrease. The pH range for the loading process may be approximately 0.5 to 1.5. In the stripping process, the pH range may be controlled into approximately 0.5 to 1.5, using sulfuric acid (H₂SO₄). In addition, a reaction temperature may be set to be 30 to 40°C.

### Third Purification Process (S63)

The third purification process (S63) may allow for further refinement of the second purified solution produced by the second purification process (S62). The third purification process (S63) may be conducted after the second purification process (S62). The third purification process (S63) may be a process for removing impurities using a solvent extraction technique. In the third purification process (S63), an organic extractant may be employed to remove impurities including cobalt. In an embodiment, the third purification process (S63) may include a loading process and a stripping process. As the organic extractant, at least one selected from the group of di-2-ethylhexyl phosphoric acid, mono-2-ethylhexyl (2-ethylhexyl)phosphonate, and bis (2,4,4-Trimethylpentyl) phosphinic acid may be used.

In the loading process, impurities containing cobalt may be extracted into an organic phase from the second purified solution. The loading process may be a process in which an organic extractant may be used to extract cobalt into an organic phase from the second purified solution after the second purification process (S62).

The amount of the organic phase inputted to the loading process may be a volume ratio of approximately 1 to 3, relative to the aqueous phase. When the volume ratio of organic phase to aqueous phase is less than 1, the target metal incompletely binds to the organic extractant, with the consequent extraction rate of 90% or less. A weight ratio of organic phase to aqueous phase exceeding 3 could lead to excessive use of the organic extractant, increasing process costs. The pH range for the loading process can be controlled to between 4 and 5 using sodium hydroxide (NaOH) or sodium carbonate (Na₂CO₃), with the reaction temperature maintained between 30°C and 40°C.

Once the cobalt extraction into the organic phase by mixing the aqueous phase and the organic phase is completed, the difference in specific gravity between the organic phase and the aqueous phase may allow for phase separation. This phase separation may yield a third purified solution, which is a cobalt-depleted, nickel-containing aqueous solution with a nickel content of 65 to 125 g/L.

The cobalt-containing organic phase may be subjected to a stripping process.

In the stripping process subsequent to the loading process, an inorganic acid may be added to the organic phase to remove the cobalt contained in the organic phase. The stripping process may be a back-extraction process for pulling cobalt back into the aqueous phase from the organic phase.

The volume ratio of organic to aqueous phase in the stripping process may be about 3 to 10. When the volume ratio of organic to aqueous phase in the stripping process is below 3, water usage may increase while complete extraction of impurities is possible. When the volume ratio of organic to aqueous phase in the stripping process is above 10, the efficiency of impurity back-extraction may decrease. The pH range for the loading process may be approximately 0.5 to 1.5. In the stripping process, the pH range may be controlled into approximately 0.5 to 1.5, using sulfuric acid (H₂SO₄). In addition, a reaction temperature may be set to be 30 to 40°C.

Once the cobalt extraction into the organic phase by mixing the aqueous phase and the organic phase is completed, the difference in specific gravity between the organic phase and the aqueous phase may allow for phase separation. This phase separation may yield a cobalt-containing solution which can be further purified by precipitation and crystallization to afford high-purity cobalt sulfate.

### Precipitation Process (S70)

The precipitation process (S70) allows for the precipitation of the purified solution produced by the purification process (S60) (e.g., the third purification process (S63)). The precipitation process (S70) may be carried out following the third purification process (S63).

The precipitation process (S70) may be a process in which nickel is precipitated using a precipitation method to remove impurities. In the precipitation process (S70), at least one selected from the group of sodium hydroxide (NaOH), sodium carbonate (Na₂CO₃), calcium hydroxide (Ca(OH)₂), magnesium hydroxide (Mg(OH)₂), calcium oxide (CaO), and magnesium oxide (MgO) may be used as a precipitant for precipitating nickel.

When sodium carbonate is used as a precipitant, the reaction can be represented by the following Reaction Formula 9.

[Reaction Formula 9] 4NiSO₄ + 4Na₂CO₃ + xH₂O→ NiCO₃·3Ni(OH)₂·4H₂O + 4Na₂SO₄ + xH₂O (x≥0)

The precipitation process (S70) can be performed at a temperature of 75 to 85°C and a pH of 6.5 to 10.0. A pH below 6.5 may result in a nickel recovery rate of less than 80%. When the pH is over 10.0, impurities attributed to the precipitant may be abundant and introduced, thus negatively affecting the process and reducing cost-effectiveness due to excessive use of the precipitant.

Impurities including sodium (Na) and potassium (K) may be partially removed during the precipitation process (S70). For instance, after the precipitation reaction, the process of recovering nickel-containing precipitates through solid-liquid separation and washing them with dilute acid and water may remove at least some of these impurities.

### Third Leaching Process (S80)

In the third leaching process (S80), the nickel-containing precipitates produced by the precipitation process (S70) is leached. The third leaching process (S80) can be carried out after the precipitation process (S70) and utilizes inorganic acid or a mixture of inorganic acid and water to leach the nickel-containing precipitates. In an embodimente, the third leaching process (S80) may be carried out using an inorganic acid. By way of example, the inorganic acid may be at least one selected from the group of sulfuric acid (H₂SO₄), hydrochloric acid (HCl), and nitric acid (HNO₃), which may each be diluted with water. The sulfuric acid used could be produced by capturing sulfur dioxide gas generated in the preceding roasting process (S30).

In an embodiment, sulfuric acid may be used as the leaching agent. In this regard, the following Reaction Formula 10 shows how nickel from the nickel-containing raw material can be leached into the form of nickel sulfate (NiSO₄), producing the third leachate.

[Reaction Formula 10] NiCO₃·3Ni(OH)₂·4H₂O + 4H₂SO₄ + xH₂O→ 4NiSO₄ + xH₂O + CO₂↑ (x≥0)

The third leaching process (S80) can be performed at a temperature of 55 to 65°C, and a pH of 1.5 to 5.5. The nickel concentration in the third leachate obtained from the third leaching process (S80) can be approximately 90 to 140g/L.

The third nickel-containing leachate produced by the present invention can be used as a precursor material for the cathode active materials of lithium-ion batteries, as it is. Typically, the water of the aqueous solution may be evaporated to recover nickel sulfate hexahydrate (NiSO₄·6H₂O) as a crystal through a crystallization process.

### EXPERIMENTAL EXAMPLES

### [Raw Materials]

As shown in Table 3, below, the elements were mixed at predetermined ratios to prepare first raw materials A to C.

**TABLE 3**

| (unit wt%) | | | | | | | | | |
|---|---|---|---|---|---|---|---|---|---|
| | Ni | Li | Co | Cu | Fe | Zn | Mg | Al | Mn |
| A | 26.0 | 4.5 | 5.0 | 0.7 | 0.01 | 0.005 | 0.004 | 0.5 | 4.5 |
| B | 12.0 | 0.001 | 0.3 | 2.7 | 34.0 | 0.02 | 2.0 | 0.4 | 0.02 |
| C | 35.0 | 0.1 | 3.0 | 0.01 | 0.05 | 0.5 | 3.0 | 0.06 | 6.0 |

| | | | | | | | | | |
|---|---|---|---|---|---|---|---|---|---|
| * Each of the first raw materials contained sulfur (S), oxygen (O), and hydrogen (H) ions in addition to the metal ions to form 100 weight%. | | | | | | | | | |

A second raw material was prepared to contain elements as indicated in Table 4, below.

**TABLE 4**

| (unit wt%) | | | | | | | | |
|---|---|---|---|---|---|---|---|---|
| Ni | Fe | Co | Cu | Zn | Mn | Mg | Al | S |
| 13.6 | 32.8 | 0.3 | 2.0 | 0.02 | 0.02 | 2.5 | 0.4 | 25.7 |

| | | | | | | | | |
|---|---|---|---|---|---|---|---|---|
| * The second raw material contained oxygen (O) and hydrogen (H) ions in addition to the metal ions to form 100 weight%. | | | | | | | | |

### [Reduction Heat Treatment Process]

A reduction heat treatment was performed on the first raw material containing nickel, lithium, etc. Specifically, 2.0 kg of the raw material was loaded into a rotary kiln and then subjected to reduction heat treatment at 850°C for 3 hours while a reduction atmosphere was maintained using N₂ gas, to afford a post-reduction heat treatment residue that was converted from lithium oxide (Li₂O) to lithium carbonate (Li₂CO₃).

### [First Leaching Process]

Lithium recovery was performed through water leaching of the residue after the reduction heat treatment. Specifically, 100g of the residue was loaded into a ball mill and then ground and leached with 2.5L of water (H₂O) for 2 hours. Thereafter, solid-liquid separation using vacuum filtration yielded a first leaching residue containing the elements shown in Table 5 and a first leachate containing the elements shown in Table 6 were secured.

**TABLE 5**

| (unit wt%) | | | | | | | |
|---|---|---|---|---|---|---|---|
| Ni | Co | Fe | Mg | Al | Cu | Mn | Zn |
| 36.0 | 7.0 | 0.02 | 0.001 | 0.6 | 0.9 | 6.5 | 0.007 |

| | | | | | | | |
|---|---|---|---|---|---|---|---|
| * In addition to the metal ions, oxygen (O) and hydrogen (H) ions were contained to form 100 weight%. | | | | | | | |

**TABLE 6**

| (unit g/L) | | | | | | | | |
|---|---|---|---|---|---|---|---|---|
| Li | Na | Co | Fe | Mg | Al | Cu | Mn | Zn |
| 1.8 | 24.0 | 0.1 | 0.02 | 0.01 | 0.05 | 0.1 | 0.05 | 0.01 |

### [Roasting Process]

A roasting process was performed on a second raw material containing nickel and sulfur. In brief, 2 kg of the raw material was loaded into a rotary kiln and roasted at 850°C for 3 hours while sufficiently injecting oxygen (O₂), to obtain roasted residue (calcine) that was converted from nickel sulfide (NiS) to nickel oxide (NiO).

### [Second Leaching Process]

A raw material in which the post-reduction heat treatment residue and the post-roasting residue were mixed at a weight ratio of 2:8 was subjected to high-temperature, high-pressure leaching.

In an autoclave, a mixture of 450g of the mixed raw materials and 3L of water was maintained at an initial acidity of 120 g/L and a temperature of 240°C under 3500 kPa for 3 hours to afford a second leachate with a nickel leaching rate of 95% and a nickel concentration of 60 g/L.

### [Neutralization Process]

A neutralization process was performed using nickel-containing by-products in the second leachate.

By controlling the pH of 2L of the second leachate to 2.5 with the addition of nickel-containing by-products and maintaining same at 80°C for 3 hours, a neutralized solution with a nickel concentration of 82 g/L was secured.

### [First Purification Process]

A first purification process was conducted using a precipitation method to remove impurities contained in the neutralized solution.

By adding sodium hydrosulfide (NaSH) in an amount of 1.3 equivalents (eq) of the copper (Cu) content in the neutralized solution and maintaining a pH of 2.5 at 70°C for 2 hours, copper was removed by 99.8%. Furthermore, the neutralized solution was maintained at a pH of 4.5 for 2 hours with the nickel-containing by-products and sodium hydroxide (NaOH) to afford a first purified solution in which impurities including aluminum, iron, and silicon contained therein were removed by 99.5% or more.

### [Second Purification Process]

A second purification process was carried out using a solvent extraction method to remove impurities contained in the first purified solution.

Impurities including zinc and magnesium was removed by extraction. In this regard, 500 mL of the first purified solution was mixed with 1,000 mL of 25% diluted di-2-ethylhexyl phosphoric acid as an extractant and the mixture was agitated at a pH of 3.5 at 40°C for 10 minutes. Phase separation by specific gravity difference allowed for the extraction of zinc by 99% and magnesium by 43%. Complete extraction of impurities was possible using a counter-current exchange method in a mixer settler.

### [Third Purification Process]

The third purification process was performed using a solvent extraction method to remove cobalt contained in the second purified solution.

A mixture of 500 mL of cobalt-containing second purified solution and 1,000 mL of 25% diluted bis (2,4,4-trimethylpentyl) phosphinic acid as an extractant was agitated at a pH of 5.0 at 40°C for 10 minutes, and phase separation by specific gravity difference allowed for the extraction of cobalt by about 55%. Complete extraction of impurities was possible using a counter-current exchange method in a mixer settler.

This process allowed for the removal of cobalt to the level of 3 mg/L or less to afford a post-third purification solution containing the elements given in Table 7, below.

**TABLE 7**

| (unit g/L) | | | | | | | |
|---|---|---|---|---|---|---|---|
| Ni | Co | Fe | Mg | Al | Cu | Mn | Zn |
| 58 | 0.0025 | 0.00001 | 0.0002 | 0.00001 | 0.00001 | 0.00005 | 0.000001 |

### [Precipitation Process]

A precipitation process was conducted to recover nickel contained in the third purified solution into a precipitate form.

Using sodium carbonate (Na₂CO₃), the pH was maintained at 8.0 at 85°C for 2 hours for 1 L of the third refined solution containing 42 g/L of nickel. Solid-liquid separation using vacuum filtration was carried out, followed by rinsing with 1 L of distilled water (DIW) to afford precipitate residue containing elements shown in Table 8.

**TABLE 8**

| (unit wt%) | | | | | | | |
|---|---|---|---|---|---|---|---|
| Ni | Co | Fe | Mg | Al | Cu | Mn | Zn |
| 55 | 0.01 | 0.01 | 5.0 | 0.01 | 0.01 | 0.7 | 0.01 |

| | | | | | | | |
|---|---|---|---|---|---|---|---|
| * In addition to the metal ions, sulfur (S), oxygen (O), and hydrogen (H) ions were contained to form 100 wt%. | | | | | | | |

### [Third Leaching Process]

A third leaching process using sulfuric acid was conducted for the conversion of precipitate residue to nickel sulfate.

A mixture of 500g of nickel-containing precipitate residue and 1 L of water was maintained at a pH of 3.5 at 60°C for 1 hour with sulfuric acid. As a result, nickel was completely leached to obtain a third leachate containing elements as shown in Table 9.

**TABLE 9**

| (unit g/L) | | | | | | | |
|---|---|---|---|---|---|---|---|
| Ni | Co | Fe | Mg | Al | Cu | Mn | Zn |
| 126 | 8.0 | 0.01 | 1.1 | 0.01 | 0.01 | 0.1 | 0.01 |

## Claims

1. A nickel recovering method, comprising:
(A-i) a reduction heat treatment process for thermally treating a first raw material containing nickel and lithium;
(B) a first leaching process for leaching the heat-treated product produced by the reduction heat treatment process;
(A-ii) a roasting process for thermally treating a second raw material containing nickel and sulfur;
(C) a second leaching process for leaching the first leaching residue produced by the first leaching process and calcine produced by the roasting process;
(D) a neutralization process for neutralizing the second leachate produced by the second leaching process;
(E) a purification process for removing impurities contained in the neutralized solution produced by the neutralization process,
(F) a precipitation process of performing a precipitation method to recover nickel from a purified solution produced by the purification process; and
(G) a third leaching process of leaching the precipitate produced by the precipitation process.

2. The nickel recovering method of Claim 1, wherein the first raw material and the second raw material each independently comprises at least one selected from the group of an oxide, a hydroxide, a sulfide, and a sulfur oxide,
the oxide, hydroxide, sulfide, and sulfur oxide each independently containing ore, matte, black mass (BM), black powder (BP), mixed hydroxide precipitate (MHP), mixed carbonate precipitate (MCP), mixed sulfide precipitate (MSP), or a mixture thereof.

3. The nickel recovering method of Claim 1, wherein the first raw material comprises nickel in a form of nickel oxide or nickel metal composite oxide.

4. The nickel recovering method of Claim 1, wherein the second raw material comprises nickel in a form of nickel sulfide.

5. The nickel recovering method of Claim 1, wherein the reduction heat-treatment process is carried out at 650 to 950°C in a manner of introducing the first raw material into a thermal treatment equipment and injecting nitrogen gas.

6. The nickel recovering method of Claim 1, wherein the first leaching process is carried out using a first leaching agent including an inorganic acid, water, or a mixture thereof.

7. The nickel recovering method of Claim 1, wherein the first leachate obtained by the first leaching process contains lithium and the first leaching residue contains nickel.

8. The nickel recovering method of Claim 1, wherein the roasting process is carried out at 650 to 950°C in a manner of introducing the second raw material into a thermal treatment equipment and injecting oxygen gas.

9. The nickel recovering method of Claim 1, wherein, in the second leaching process, the first leaching residue and the calcine are leached in an atmospheric reactor and a high-temperature, high-pressure reactor, respectively.

10. The nickel recovering method of Claim 1, wherein the second leaching process is carried out using a second leaching agent including an inorganic acid or a mixture of an inorganic acid and water.

11. The nickel recovering method of Claim 1, wherein the second leaching process is carried out at a temperature of 150 to 250°C under a pressure of 800 to 4300 kPa.

12. The nickel recovering method of Claim 1, wherein the second leaching process is carried out in an environment with an acidity of 100 to 200 g/L.

13. The nickel recovering method of Claim 1, wherein the neutralizing process is carried out using a neutralizing agent including MHP, MCP, nickel hydroxide (Ni(OH)₂), nickel carbonate (NiCO₃), sodium hydroxide (NaOH), sodium carbonate (Na₂CO₃), calcium hydroxide (Ca(OH)₂), magnesium hydroxide (Mg(OH)₂), calcium oxide (CaO), magnesium oxide (MgO), or a mixture thereof.

14. The nickel recovering method of Claim 1, wherein the neutralizing process is carried out at 80°C under conditions of a pH of 2 to 4.5.

15. The nickel recovering method of Claim 1, wherein the purification process comprises:
(E-i) a first purification process for removing impurities contained in the neutralized solution produced by the neutralization process;
(E-ii) a second purification process for removing impurities contained in a first purified solution produced by the first purification process; and
(E-iii) a third purification process for removing impurities contained in a second purified solution produced by the second purification process.

16. The nickel recovering method of Claim 15, wherein the first purification process removes impurities including copper, iron, aluminum, silicon, zinc, cobalt, magnesium, or a combination thereof, using a precipitation method.

17. The nickel recovering method of Claim 15, wherein the first purification process is carried out using (i) a sulfide precipitation process of adding a sulfide precipitating agent to the neutralized solution at a content of 1.0 to 2.5 equivalents of a copper content in the neutralized solution, (ii) a hydroxide precipitation process of adding a hydroxide precipitating agent to the neutralized solution at a content of 0.8 to 1.5 equivalents of an impurity content in the neutralized solution, or a combination of (i) and (ii).

18. The nickel recovering method of Claim 15, wherein the second purification process removes impurities including zinc, magnesium, manganese, or a combination thereof, using a solvent extraction method.

19. The nickel recovering method of Claim 15, wherein the second purification process is carried out using (i) a loading process of adding a first solvent extractant to the first purified solution to extract impurities including zinc, magnesium, manganese, or a combination thereof into an organic phase, and (ii) a stripping process of adding an inorganic acid to the organic phase to extract impurities including zinc, magnesium, manganese, or a combination thereof, contained in the organic phase, into an aqueous phase.

20. The nickel recovering method of Claim 15, wherein the third purification process removes impurities including cobalt, using a solvent extraction method.

21. The nickel recovering method of Claim 15, wherein the third purification process comprises (i) a loading process of adding a second solvent extractant to the second purified solution to extract impurities including cobalt into an organic phase, and (ii) a stripping process of adding an inorganic acid to the organic phase to extract impurities including cobalt, contained in the organic phase, into an aqueous phase.

22. The nickel recovering method of claim 1, wherein the precipitation process is carried out using a precipitating agent including sodium hydroxide (NaOH), sodium carbonate (Na₂CO₃), calcium hydroxide (Ca(OH)₂), magnesium hydroxide (Mg(OH)₂), calcium oxide (CaO), magnesium oxide (MgO), or a mixture thereof.

23. The nickel recovering method of claim 1, wherein the precipitation process is carried out at 85°C in a condition of a pH of 6.5 to 10.0.

24. The nickel recovering method of claim 1, wherein the third leaching process is carried out using a third leaching agent including an inorganic acid or a mixture of an inorganic and water.

25. The nickel recovering method of claim 1, wherein the third leaching process is carried out at 60°C in a condition of a pH of 1.5 to 5.5.

## Patentansprüche

1. Nickelrückgewinnungsverfahren, umfassend:
(A-i) einen Reduktionswärmebehandlungsprozess zum thermischen Behandeln eines ersten Rohmaterials, das Nickel und Lithium enthält;
(B) einen ersten Auslaugungsprozess zum Auslaugen des wärmebehandelten Produkts, das durch den Reduktionswärmebehandlungsprozess erzeugt wird;
(A-ii) einen Röstprozess zum thermischen Behandeln eines zweiten Rohmaterials, das Nickel und Schwefel enthält;
(C) einen zweiten Auslaugungsprozess zum Auslaugen des ersten Auslaugungsrückstands, der durch den ersten Auslaugungsprozess erzeugt wird, und von kalziniertem Material, das durch den Röstprozess erzeugt wird;
(D) einen Neutralisationsprozess zum Neutralisieren der zweiten Auslaugungslösung, die durch den zweiten Auslaugungsprozess erzeugt wird;
(E) einen Reinigungsprozess zum Entfernen von Verunreinigungen, die in der neutralisierten Lösung enthalten sind, die durch den Neutralisationsprozess erzeugt wird,
(F) einen Fällungsprozess zum Durchführen eines Fällungsverfahrens zum Rückgewinnen von Nickel aus einer gereinigten Lösung, die durch den Reinigungsprozess erzeugt wird; und
(G) einen dritten Auslaugungsprozess zum Auslaugen des Niederschlags, der durch den Fällungsprozess erzeugt wird.

2. Nickelrückgewinnungsverfahren nach Anspruch 1, wobei das erste Rohmaterial und das zweite Rohmaterial jeweils unabhängig mindestens eines umfassen, das aus der Gruppe eines Oxids, eines Hydroxids, eines Sulfids und eines Schwefeloxids ausgewählt ist,
wobei das Oxid, das Hydroxid, das Sulfid und das Schwefeloxid jeweils unabhängig Erz, Matte, schwarze Masse (BM), schwarzes Pulver (BP), gemischten Hydroxidniederschlag (MHP), gemischten Carbonatniederschlag (MCP), gemischten Sulfidniederschlag (MSP) oder eine Mischung davon enthalten.

3. Nickelrückgewinnungsverfahren nach Anspruch 1, wobei das erste Rohmaterial Nickel in einer Form von Nickeloxid oder Nickel-Metall-Verbundoxid umfasst.

4. Nickelrückgewinnungsverfahren nach Anspruch 1, wobei das zweite Rohmaterial Nickel in einer Form von Nickelsulfid umfasst.

5. Nickelrückgewinnungsverfahren nach Anspruch 1, wobei der Reduktionswärmebehandlungsprozess bei 650 bis 950 °C auf eine Weise des Einführens des ersten Rohmaterials in eine Wärmebehandlungseinrichtung und des Einspritzens von Stickstoffgas durchgeführt wird.

6. Nickelrückgewinnungsverfahren nach Anspruch 1, wobei der erste Auslaugungsprozess unter Verwendung eines ersten Auslaugungsmittels durchgeführt wird, das eine anorganische Säure, Wasser oder eine Mischung davon einschließt.

7. Nickelrückgewinnungsverfahren nach Anspruch 1, wobei das erste Auslaugungsprodukt, das durch den ersten Auslaugungsprozess erhalten wird, Lithium enthält und der erste Auslaugungsrückstand Nickel enthält.

8. Nickelrückgewinnungsverfahren nach Anspruch 1, wobei der Röstprozess bei 650 bis 950 °C auf eine Weise des Einführens des zweiten Rohmaterials in eine Wärmebehandlungseinrichtung und des Einspritzens von Sauerstoffgas durchgeführt wird.

9. Nickelrückgewinnungsverfahren nach Anspruch 1, wobei in dem zweiten Auslaugungsprozess der erste Auslaugungsrückstand und das kalzinierte Material in einem atmosphärischen Reaktor bzw. einem Hochtemperatur-Hochdruckreaktor ausgelaugt werden.

10. Nickelrückgewinnungsverfahren nach Anspruch 1, wobei der zweite Auslaugungsprozess unter Verwendung eines zweiten Auslaugungsmittels durchgeführt wird, das eine anorganische Säure oder eine Mischung aus einer anorganischen Säure und Wasser einschließt.

11. Nickelrückgewinnungsverfahren nach Anspruch 1, wobei der zweite Auslaugungsprozess bei einer Temperatur von 150 bis 250 °C unter einem Druck von 800 bis 4300 kPa durchgeführt wird.

12. Nickelrückgewinnungsverfahren nach Anspruch 1, wobei der zweite Auslaugungsprozess in einer Umgebung mit einem Säuregehalt von 100 bis 200 g/l durchgeführt wird.

13. Nickelrückgewinnungsverfahren nach Anspruch 1, wobei der Neutralisationsprozess unter Verwendung eines Neutralisationsmittels durchgeführt wird, das MHP, MCP, Nickelhydroxid (Ni(OH)₂), Nickelcarbonat (NiCO₃), Natriumhydroxid (NaOH), Natriumcarbonat (Na₂CO₃), Calciumhydroxid (Ca(OH)₂), Magnesiumhydroxid (Mg(OH)₂), Calciumoxid (CaO), Magnesiumoxid (MgO) oder eine Mischung davon einschließt.

14. Nickelrückgewinnungsverfahren nach Anspruch 1, wobei der Neutralisationsprozess bei 80 °C unter Bedingungen eines pH-Werts von 2 bis 4,5 durchgeführt wird.

15. Nickelrückgewinnungsverfahren nach Anspruch 1, wobei der Reinigungsprozess umfasst:
(E-i) einen ersten Reinigungsprozess zum Entfernen von Verunreinigungen, die in der neutralisierten Lösung enthalten sind, die durch den Neutralisationsprozess erzeugt wird;
(E-ii) einen zweiten Reinigungsprozess zum Entfernen von Verunreinigungen, die in einer ersten gereinigten Lösung enthalten sind, die durch den ersten Reinigungsprozess erzeugt wird; und
(E-iii) einen dritten Reinigungsprozess zum Entfernen von Verunreinigungen, die in einer zweiten gereinigten Lösung enthalten sind, die durch den zweiten Reinigungsprozess erzeugt wird.

16. Nickelrückgewinnungsverfahren nach Anspruch 15, wobei der erste Reinigungsprozess Verunreinigungen, die Kupfer, Eisen, Aluminium, Silizium, Zink, Kobalt, Magnesium oder eine Kombination davon einschließen, unter Verwendung eines Fällungsverfahrens entfernt.

17. Nickelrückgewinnungsverfahren nach Anspruch 15, wobei der erste Reinigungsprozess unter Verwendung (i) eines Sulfidfällungsprozesses zum Zugeben eines Sulfidfällungsmittels zu der neutralisierten Lösung mit einem Gehalt von 1,0 bis 2,5 Äquivalenten eines Kupfergehalts in der neutralisierten Lösung, (ii) eines Hydroxidfällungsprozesses zum Zugeben eines Hydroxidfällungsmittels zu der neutralisierten Lösung mit einem Gehalt von 0,8 bis 1,5 Äquivalenten eines Verunreinigungsgehalts in der neutralisierten Lösung oder einer Kombination von (i) und (ii) durchgeführt wird.

18. Nickelrückgewinnungsverfahren nach Anspruch 15, wobei der zweite Reinigungsprozess Verunreinigungen, die Zink, Magnesium, Mangan oder eine Kombination davon einschließen, unter Verwendung eines Lösungsmittelextraktionsverfahrens entfernt.

19. Nickelrückgewinnungsverfahren nach Anspruch 15, wobei der zweite Reinigungsprozess unter Verwendung (i) eines Ladeprozesses zum Zugeben eines ersten Lösungsmittelextraktionsmittels zu der ersten gereinigten Lösung, um Verunreinigungen, die Zink, Magnesium, Mangan oder eine Kombination davon einschließen, in eine organische Phase zu extrahieren, und (ii) eines Strippprozesses zum Zugeben einer anorganischen Säure zu der organischen Phase, um Verunreinigungen, die Zink, Magnesium, Mangan oder eine Kombination davon einschließen, die in der organischen Phase enthalten sind, in eine wässrige Phase zu extrahieren, durchgeführt wird.

20. Nickelrückgewinnungsverfahren nach Anspruch 15, wobei der dritte Reinigungsprozess Verunreinigungen, die Kobalt einschließen, unter Verwendung eines Lösungsmittelextraktionsverfahrens entfernt.

21. Nickelrückgewinnungsverfahren nach Anspruch 15, wobei der dritte Reinigungsprozess (i) einen Ladeprozess zum Zugeben eines zweiten Lösungsmittelextraktionsmittels zu der zweiten gereinigten Lösung, um Verunreinigungen, die Kobalt einschließen, in eine organische Phase zu extrahieren, und (ii) einen Strippprozess zum Zugeben einer anorganischen Säure zu der organischen Phase, um Verunreinigungen, die Kobalt einschließen, die in der organischen Phase enthalten sind, in eine wässrige Phase zu extrahieren, umfasst.

22. Nickelrückgewinnungsverfahren nach Anspruch 1, wobei der Fällungsprozess unter Verwendung eines Fällungsmittels durchgeführt wird, das Natriumhydroxid (NaOH), Natriumcarbonat (Na₂CO₃), Calciumhydroxid (Ca(OH)₂), Magnesiumhydroxid (Mg(OH)₂), Calciumoxid (CaO), Magnesiumoxid (MgO) oder eine Mischung davon einschließt.

23. Nickelrückgewinnungsverfahren nach Anspruch 1, wobei der Fällungsprozess bei 85 °C unter einer Bedingung eines pH-Werts von 6,5 bis 10,0 durchgeführt wird.

24. Nickelrückgewinnungsverfahren nach Anspruch 1, wobei der dritte Auslaugungsprozess unter Verwendung eines dritten Auslaugungsmittels durchgeführt wird, das eine anorganische Säure oder eine Mischung aus einer anorganischen Säure und Wasser einschließt.

25. Nickelrückgewinnungsverfahren nach Anspruch 1, wobei der dritte Auslaugungsprozess bei 60 °C unter einer Bedingung eines pH-Werts von 1,5 bis 5,5 durchgeführt wird.

## Revendications

1. Procédé de récupération de nickel, comprenant :
(A-i) un processus de traitement thermique de réduction pour traiter thermiquement une première matière première contenant du nickel et du lithium ;
(B) un premier processus de lixiviation pour lixivier le produit traité thermiquement produit par le processus de traitement thermique de réduction ;
(A-ii) un processus de torréfaction pour traiter thermiquement une seconde matière première contenant du nickel et du soufre ;
(C) un second processus de lixiviation pour lixivier le premier résidu de lixiviation produit par le premier processus de lixiviation et la calcine produite par le processus de torréfaction ;
(D) un processus de neutralisation pour neutraliser le second lixiviat produit par le second processus de lixiviation ;
(E) un processus de purification pour éliminer les impuretés contenues dans la solution neutralisée produite par le processus de neutralisation,
(F) un processus de précipitation consistant à effectuer un procédé de précipitation pour récupérer le nickel à partir d'une solution purifiée produite par le processus de purification ; et
(G) un troisième processus de lixiviation consistant à lixivier le précipité produit par le processus de précipitation.

2. Procédé de récupération de nickel selon la revendication 1, dans lequel la première matière première et la seconde matière première comprennent chacune indépendamment au moins un élément choisi dans le groupe d'un oxyde, d'un hydroxyde, d'un sulfure et d'un oxyde de soufre,
l'oxyde, l'hydroxyde, le sulfure et l'oxyde de soufre contenant chacun indépendamment du minerai, de la matte, de la masse noire (BM), de la poudre noire (BP), un précipité d'hydroxyde mixte (MHP), un précipité de carbonate mixte (MCP), un précipité de sulfure mixte (MSP) ou un mélange de ceux-ci.

3. Procédé de récupération de nickel selon la revendication 1, dans lequel la première matière première comprend du nickel sous forme d'oxyde de nickel ou d'oxyde composite nickel-métal.

4. Procédé de récupération de nickel selon la revendication 1, dans lequel la seconde matière première comprend du nickel sous forme de sulfure de nickel.

5. Procédé de récupération de nickel selon la revendication 1, dans lequel le processus de traitement thermique de réduction est effectué à une température de 650 à 950 °C de manière à introduire la première matière première dans un équipement de traitement thermique et à injecter de l'azote gazeux.

6. Procédé de récupération de nickel selon la revendication 1, dans lequel le premier processus de lixiviation est effectué en utilisant un premier agent de lixiviation comprenant un acide inorganique, de l'eau ou un mélange de ceux-ci.

7. Procédé de récupération de nickel selon la revendication 1, dans lequel le premier lixiviat obtenu par le premier processus de lixiviation contient du lithium et le premier résidu de lixiviation contient du nickel.

8. Procédé de récupération de nickel selon la revendication 1, dans lequel le processus de torréfaction est effectué à une température de 650 à 950 °C de manière à introduire la seconde matière première dans un équipement de traitement thermique et à injecter de l'oxygène gazeux.

9. Procédé de récupération de nickel selon la revendication 1, dans lequel, dans le second processus de lixiviation, le premier résidu de lixiviation et la calcine sont lixiviés dans un réacteur atmosphérique et un réacteur haute pression à haute température, respectivement.

10. Procédé de récupération de nickel selon la revendication 1, dans lequel le second processus de lixiviation est effectué en utilisant un second agent de lixiviation comprenant un acide inorganique ou un mélange d'un acide inorganique et d'eau.

11. Procédé de récupération de nickel selon la revendication 1, dans lequel le second processus de lixiviation est effectué à une température de 150 à 250 °C sous une pression de 800 à 4300 kPa.

12. Procédé de récupération de nickel selon la revendication 1, dans lequel le second processus de lixiviation est effectué dans un environnement ayant une acidité de 100 à 200 g/L.

13. Procédé de récupération de nickel selon la revendication 1, dans lequel le processus de neutralisation est effectué en utilisant un agent de neutralisation comprenant MHP, MCP, hydroxyde de nickel (Ni(OH)₂), carbonate de nickel (NiCO₃), hydroxyde de sodium (NaOH), carbonate de sodium (Na₂CO₃), hydroxyde de calcium (Ca(OH)₂), hydroxyde de magnésium (Mg(OH)₂), oxyde de calcium (CaO), oxyde de magnésium (MgO) ou un mélange de ceux-ci.

14. Procédé de récupération de nickel selon la revendication 1, dans lequel le processus de neutralisation est effectué à 80 °C dans des conditions de pH de 2 à 4,5.

15. Procédé de récupération de nickel selon la revendication 1, dans lequel le processus de purification comprend :
(E-i) un premier processus de purification pour éliminer les impuretés contenues dans la solution neutralisée produite par le processus de neutralisation ;
(E-ii) un deuxième processus de purification pour éliminer les impuretés contenues dans une première solution purifiée produite par le premier processus de purification ; et
(E-iii) un troisième processus de purification pour éliminer les impuretés contenues dans une seconde solution purifiée produite par le deuxième processus de purification.

16. Procédé de récupération de nickel selon la revendication 15, dans lequel le premier processus de purification élimine les impuretés comprenant du cuivre, du fer, de l'aluminium, du silicium, du zinc, du cobalt, du magnésium ou une combinaison de ceux-ci, en utilisant un procédé de précipitation.

17. Procédé de récupération de nickel selon la revendication 15, dans lequel le premier processus de purification est effectué en utilisant (i) un processus de précipitation de sulfure consistant à ajouter un agent de précipitation de sulfure à la solution neutralisée à une teneur de 1,0 à 2,5 équivalents d'une teneur en cuivre dans la solution neutralisée, (ii) un processus de précipitation d'hydroxyde consistant à ajouter un agent de précipitation d'hydroxyde à la solution neutralisée à une teneur de 0,8 à 1,5 équivalents d'une teneur en impuretés dans la solution neutralisée, ou une combinaison de (i) et (ii).

18. Procédé de récupération de nickel selon la revendication 15, dans lequel le deuxième processus de purification élimine les impuretés comprenant le zinc, le magnésium, le manganèse ou une combinaison de ceux-ci, en utilisant un procédé d'extraction par solvant.

19. Procédé de récupération de nickel selon la revendication 15, dans lequel le deuxième processus de purification est effectué en utilisant (i) un processus de chargement consistant à ajouter un premier agent d'extraction par solvant à la première solution purifiée pour extraire les impuretés comprenant le zinc, le magnésium, le manganèse ou une combinaison de ceux-ci dans une phase organique, et (ii) un processus de désextraction consistant à ajouter un acide inorganique à la phase organique pour extraire les impuretés comprenant le zinc, le magnésium, le manganèse ou une combinaison de ceux-ci, contenues dans la phase organique, dans une phase aqueuse.

20. Procédé de récupération de nickel selon la revendication 15, dans lequel le troisième processus de purification élimine les impuretés comprenant le cobalt, en utilisant un procédé d'extraction par solvant.

21. Procédé de récupération de nickel selon la revendication 15, dans lequel le troisième processus de purification comprend (i) un processus de chargement consistant à ajouter un second agent d'extraction par solvant à la seconde solution purifiée pour extraire les impuretés comprenant le cobalt dans une phase organique, et (ii) un processus de désextraction consistant à ajouter un acide inorganique à la phase organique pour extraire les impuretés comprenant le cobalt, contenues dans la phase organique, dans une phase aqueuse.

22. Procédé de récupération de nickel selon la revendication 1, dans lequel le processus de précipitation est effectué en utilisant un agent de précipitation comprenant de l'hydroxyde de sodium (NaOH), du carbonate de sodium (Na₂CO₃), de l'hydroxyde de calcium (Ca(OH)₂), de l'hydroxyde de magnésium (Mg(OH)₂), de l'oxyde de calcium (CaO), de l'oxyde de magnésium (MgO) ou un mélange de ceux-ci.

23. Procédé de récupération de nickel selon la revendication 1, dans lequel le processus de précipitation est effectué à 85 °C dans des conditions de pH de 6,5 à 10,0.

24. Procédé de récupération de nickel selon la revendication 1, dans lequel le troisième processus de lixiviation est effectué en utilisant un troisième agent de lixiviation comprenant un acide inorganique ou un mélange d'un inorganique et d'eau.

25. Procédé de récupération de nickel selon la revendication 1, dans lequel le troisième processus de lixiviation est effectué à 60 °C dans des conditions de pH de 1,5 à 5,5.
